# EUROPEAN PATENT SPECIFICATION

(11) **EP 3 712 116 B1**
(45) Date of publication and mention of the grant of the patent: **29.05.2024**
(21) Application number: 20164866.4
(22) Date of filing: 23.03.2020
(51) Int. Cl.: C02F 3/34, C02F 103/42

(54) **COMPOSITION FOR OPTIMIZING THE BIOLOGICAL TREATMENT OF SWIMMING POOLS**
ZUSAMMENSETZUNG ZUR OPTIMIERUNG DER BIOLOGISCHEN BEHANDLUNG VON SCHWIMMBECKEN
COMPOSITION POUR OPTIMISER LE TRAITEMENT BIOLOGIQUE DE PISCINES

(30) Priority: 21.03.2019 BE 201905176
(43) Date of publication of application: 23.09.2020
(73) Proprietor: Aquatic Science SA, 4040 Herstal (BE)
(72) Inventor: LUIZI, Frédéric, 4910 Theux (BE); POGNOT, Jean-François, 4880 Aubel (BE); WERQUIN, Ruben, 1180 Bruxelles (BE)
(74) Representative: Calysta NV

(56) References cited:
- CN-A- 105 132 326
- CN-B- 102 826 895
- CN-B- 105 152 478
- US-A1- 2017 121 198
- US-A1- 2017 334 757
- US-B1- 9 302 924
- ALLEN ADRIAN DOUGLAS ET AL: "MALDI-TOF MS as a supportive tool for the evaluation of bacterial diversity in soils from Africa and the Americas", AEROBIOLOGIA, SPRINGER-VERLAG, DORDRECHT, NL, vol. 31, no. 1, 18 October 2014 (2014-10-18), pages 111-126, XP035459343, ISSN: 0393-5965, DOI: 10.1007/S10453-014-9351-5 [retrieved on 2014-10-18]

## Description

### FIELD OF THE INVENTION

The present invention relates to a composition suitable for optimizing a biological treatment of swimming pools. More specifically, a composition comprising a mixture of species selected from the genera *Bacillus, Paenibacillus,* and *Paracoccus,* which overcomes problems existing in the prior art and allows the proper completion of the nitrogen cycle. In a further aspect the present invention relates to a use of the composition in biological swimming pools. In an even further aspect the present invention relates to a method for the preparation of the composition.

### BACKGROUND

To ensure water quality most pools are chlorinated. Chlorination, while ensuring the disinfection of the water, generates by-products that are harmful. Generally hypochlorite salts tend to be used in pools. These salts react with water to produce the strong oxidant hypochlorous acid (HCLO). This HCLO is the major bactericidal agent in chlorinated pool waters. Ammonia and ammonia-like compounds found in human sweat and urine as well as resulting from the degradation of organic matter brought to the pool by the wind, react with HCLO, producing chloramines. These compounds can cause wheeziness and sore eyes for swimmers. Moreover, these powerful oxidants can damage epithelial barriers of the respiratory tracts of the bathers. To young children, such damage to the epithelium can increase sensitivity to allergy. Moreover, the chlorine derivatives can cross the scrotum and damage the sperm cells, thereby reducing fertility. As a consequence, various alternatives to chlorination have been sought.

A common alternative to chlorination is the biological removal of inorganic nitrogenous compounds, such as ammonium (NH₄⁺) and nitrate (NO₃) from aquatic systems. This removal has long been a topic of interest for wastewater engineers and other water treatment professionals. These compounds contribute to eutrophication and are toxic to many aquatic organisms. Therefore their presence in treated wastewater and in clean water systems, such as ponds, lakes, and reservoirs, is undesirable.

However, no easy to implement solution to this problem has been found to this date.

Solutions to biologically treat aquatic systems are known from WO 2016/179 390. WO '390 discloses a composition for removing nitrate from an aqueous medium under aerobic conditions comprising microbes. The microbes disclosed comprise among others *Bacillus* strains. WO '390 has the disadvantage that high dissolved oxygen levels are needed. The method focusses on the degradation of nitrate but does not takes into account the degradation of organic matter or any other pollutants. Moreover consumers indicate that the method of WO '390 still requires additional chlorination.

Solutions to biologically treat aquatic systems are also known from WO 2014/189 963. WO '963 discloses composition for degrading organic matter comprising microbes. The microbes disclosed comprise among others *Bacillus* strains. WO '963 has the disadvantage, that the method focusses on the degradation organic matter but does not takes into account the degradation of nitrate, nitrite, or any other pollutants. Moreover consumers indicate that the method of WO '390 still requires additional chlorination.

CN 105 132 326, CN 105 152 487 and CN 102 826 895 describe wastewater treatment systems. CN '326 describes a sodium glutamate wastewater treatment system. CN '487 and CN '895 describe sewage treatment systems. None of the above documents relate to the treatment of pools. None of the above documents discusses a proper completion of the nitrogen cycle.

US 9 302 924 and US 2017 0 121 198 relate to the treatment for pools. None of the above documents discusses a proper completion of the nitrogen cycle.

Allen et al.: "MALDI-TOF MS as a supportive tool for the evaluation of bacterial diversity in soils from Africa and the Americas", AEROBIOLOGIA, SPRINGER-VERLAG, DORDRECHT, NL, vol. 31, no. 1, 18 October 2014, pp. 111-126, discusses an analystic tool for evaluation of bacterial diversity in soils. Water treatment is not disclosed therein.

The present invention aims to resolve at least some of the problems and disadvantages mentioned above.

### SUMMARY OF THE INVENTION

In a first aspect the invention relates to a composition suitable for optimizing a biological treatment of swimming pools according to claim 1, wherein the composition comprises a bacterial agent, wherein said bacterial agent comprises a mixture of species selected from the genera *Bacillus, Paenibacillus,* and *Paracoccus,* wherein the bacterial agent comprises a weight ratio of bacteria selected from the *Paracoccus* genus to bacteria selected from the *Paenibacillus* genus of about 1:1 to 15:1, preferably of about 2:1 to 13:1, most preferably of about 3:1 to 10:1, wherein the bacterial agent comprises bacteria selected from the Bacillus genus at a weight ratio of about 60 w/w% to 95 w/w%. In a second aspect the invention relates to the use of the composition in swimming pools according to claim 14, preferably in biological swimming pools. In a third aspect the invention relates to a method for the preparation of the composition according to claim 15.

Preferred embodiments of the composition suitable for optimizing a biological treatment of swimming pools are shown in any of the claims 2 to 13. Said embodiments relate in particular to the different ratios of the genera in the bacterial agent. More in particular said embodiments relate to the different species within the genera and the different agents comprised within the composition. Thus allowing the proper completion of the nitrogen cycle and the subsequent prevention of algal bloom and pollution. Thus vacating the need of chlorinating pools. Preferred embodiments of the method for the preparation of the composition are shown in claim 15. Said embodiments relate to a preparation method, wherein the species within the bacterial agent are individually fermented, harvested, and dried. Thus allowing for more optimal production conditions and a greater degree of flexibility.

### DESCRIPTION OF FIGURES

**Figure 1** shows a graph on the Chemical Oxygen Demand (COD) for the different combinations of bacterial strains A1, A2 and A3.
**Figure 2** shows a graph on the variation of the consumption of nitrate for the different combinations of bacterial strains A1, A2 and A3.
**Figure 3** shows a graph on the variation of the consumption of nitrite for the different combinations of bacterial strains A1, A2 and A3.
**Figure 4** shows a graph on the variation of the consumption of inorganic phosphorus for the different combinations of bacterial strains A1, A2 and A3.
**Figure 5** shows a graph on the COD of pure strains and the group comprising the combination of the A1, A2, and A3 strains in equal parts.
**Figure 6** shows a graph on the variation of the concentration of inorganic phosphorus for pure strains and the group comprising the combination of the A1, A2, and A3 strains in equal parts.

### DETAILED DESCRIPTION OF THE INVENTION

The present disclosure addresses limitations known in the art related to products for optimizing the biological treatment of swimming pools. The invention relates to a composition suitable for optimizing a biological treatment of swimming pools, wherein the composition comprises a bacterial agent, and wherein said bacterial agent comprises a mixture of species selected from the genera *Bacillus, Paenibacillus,* and *Paracoccus,* wherein at least one species is selected from each of said genera, wherein the bacterial agent comprises a weight ratio of bacteria selected from the *Paracoccus* genus to bacteria selected from the *Paenibacillus* genus of about 1:1 to 15:1, preferably of about 2:1 to 13:1, most preferably of about 3:1 to 10:1, wherein the bacterial agent comprises bacteria selected from the Bacillus genus at a weight ratio of about 60 w/w% to 95 w/w%. The invention further relates to the use of the composition in swimming pools, and preferably in biological swimming pools. The invention further relates to a method for the preparation of the composition.

Unless otherwise defined, all terms used in disclosing the invention, including technical and scientific terms, have the meaning as commonly understood by one of ordinary skill in the art to which this invention belongs. By means of further guidance, term definitions are included to better appreciate the teaching of the present invention.

As used herein, the following terms have the following meanings:
"A", "an", and "the" as used herein refers to both singular and plural referents unless the context clearly dictates otherwise. By way of example, "a compartment" refers to one or more than one compartment.

"About" as used herein referring to a measurable value such as a parameter, an amount, a temporal duration, and the like, is meant to encompass variations of +/-20% or less, preferably +/-10% or less, more preferably +/-5% or less, even more preferably +/-1% or less, and still more preferably +/-0.1% or less of and from the specified value, in so far such variations are appropriate to perform in the disclosed invention. However, it is to be understood that the value to which the modifier "about" refers is itself also specifically disclosed.

"Comprise", "comprising", and "comprises" and "comprised of" as used herein are synonymous with "include", "including", "includes" or "contain", "containing", "contains" and are inclusive or open-ended terms that specifies the presence of what follows e.g. component and do not exclude or preclude the presence of additional, non-recited components, features, element, members, steps, known in the art or disclosed therein.

Furthermore, the terms first, second, third and the like in the description and in the claims, are used for distinguishing between similar elements and not necessarily for describing a sequential or chronological order, unless specified. It is to be understood that the terms so used are interchangeable under appropriate circumstances and that the embodiments of the invention described herein are capable of operation in other sequences than described or illustrated herein.

The recitation of numerical ranges by endpoints includes all numbers and fractions subsumed within that range, as well as the recited endpoints.

The expression "% by weight", "weight percent", "%wt" or "wt%", here and throughout the description unless otherwise defined, refers to the relative weight of the respective component based on the overall weight of the formulation.

Whereas the terms "one or more" or "at least one", such as one or more or at least one member(s) of a group of members, is clear per se, by means of further exemplification, the term encompasses inter alia a reference to any one of said members, or to any two or more of said members, such as, e.g., any ≥3, ≥4, ≥5, ≥6 or ≥7 etc. of said members, and up to all said members.

The terms "microbial", "bacteria" or "microbes" as used herein, refer to microorganisms that confer a benefit. The microbes according to the invention may be viable or non-viable. The nonviable microbes are metabolically-active. By "metabolically-active" is meant that they exhibit at least some residual enzyme or secondary metabolite activity characteristic to that type of microbe.

By the term "viable bacteria" as used herein is meant a population of bacteria that is capable of replicating under suitable conditions under which replication is possible. A population of bacteria that does not fulfill the definition of "non-viable" (as given above) is considered to be "viable." "Wastewater," as used herein, is directed to domestic sewage from dwellings, business buildings, institutions, and farms, which contain ground water, surface water, and/or storm water.

By the term "non-viable" as used herein is meant a population of bacteria that is not capable of replicating under any known conditions. However, it is to be understood that due to normal biological variations in a population, a small percentage of the population (i.e. 5% or less) may still be viable and thus capable of replication under suitable growing conditions in a population which is otherwise defined as non-viable.

The term "active" (bacterial) cells as used herein refers to the number of viable cells. The amount of active, i.e. viable, cells may be specified in any unit or measure that is commonly used in the art. For example, the amount of active cells may be given in the number of viable cells or colony forming units (CFU) per gram sample.

The term "conservation agent" as defined herein, refers to an agent that aids the conservation and/or stabilization of a bacterial agent. Conservation agents comprise for example, but are not limited to, cryoprotectants.

The term "cryoprotectant" as defined herein, refers to a substance used to protect bacterial cells from damage during freezing, freeze-drying and thawing as well as during storage. The cryoprotectant may be any additive as long as it protects cells from damage during freezing, freeze-drying, thawing and storage. Examples of cryoprotectants include, but are not limited to, sugars (e.g. sucrose, fructose, trehalose), polyalcohols (e.g. glycerol, sorbitol, mannitol), polysaccharides (e.g. celluloses, starch, gums, maltodextrin), polyethers (e.g. polypropylene glycol, polyethylene glycol, polybutylene glycol), antioxidants (e.g. natural antioxidants, such as ascorbic acid, beta-carotene, vitamin E, glutathione, or chemical antioxidants), oils (e.g. rapeseed oil, sunflower oil, olive oil), surfactants (e.g. Tween 20, Tween 80, fatty acids), fats, peptones (e.g. soy peptones, wheat peptone, whey peptone), tryptones, vitamins, minerals (e.g. iron, manganese, zinc), hydrolysates (e.g. protein hydrolysates such as whey powder, malt extract, soy, casein hydrolysate), amino acids, peptides, proteins, nucleic acids, nucleotides, nucleobases (e.g. cytosine, guanine, adenine, thymine, uracil, xanthine, hypoxanthine, inosine, inositol), yeast extracts (e.g. yeast extracts of *Saccharomyces spp.*, *Kluyveromyces spp.*, or *Torula spp*.), beef extract, growth factors, and lipids. Other examples of cryoprotectants are disclosed in WO 2012/088 261 and WO 2012/076 665. The addition of a cryoprotectant in a process of the invention may be done by mixing a solid cryoprotectant with the bacteria concentrate for a sufficient time period at a suitable temperature.

The term "dispersing agent" as defined herein, refers to an agent that aids in the formation and/or stabilization of a dispersion.

Unless otherwise defined, all terms used in disclosing the invention, including technical and scientific terms, have the meaning as commonly understood by one of ordinary skill in the art to which this invention belongs.

In a first aspect the invention relates to a composition suitable for optimizing a biological treatment of swimming pools, wherein the composition comprises a bacterial agent, wherein said bacterial agent comprises a mixture of species selected from the genera *Bacillus, Paenibacillus,* and *Paracoccus,* wherein the bacterial agent comprises a weight ratio of bacteria selected from the *Paracoccus* genus to bacteria selected from the *Paenibacillus* genus of about 1:1 to 15:1, preferably of about 2:1 to 13: 1, most preferably of about 3: 1 to 10: 1, wherein the bacterial agent comprises bacteria selected from the Bacillus genus at a weight ratio of about 60 w/w% to 95 w/w%.

In a second aspect the invention relates to a use of the composition in swimming pools, and preferably in biological swimming pools.

To ensure a good water quality, most pools are chlorinated. However, the current solutions have the disadvantage that harmful by-products are created due to the chlorination of the pool. In general, hypochlorite salts tend to be used in pools. Both react with water to produce the strong oxidant HCLO. Ammonia and ammonia-like compounds found in human sweat and urine as well as resulting from the degradation of organic matter brought to the pool by the wind, react with HCLO to produce chloramines. These powerful oxidants can damage the epithelium barrier protecting respiratory tracts of bathers. To young children, such damage to the epithelium can increase sensitivity to allergy. The inventors unexpectedly found a bacterial agent that is able to properly complete the nitrogen cycle. As the nitrogen cycle is properly completed, algal bloom is prevented and pollution is degraded. Thus vacating the need of chlorinating pools.

The nitrogen cycle is the cycle by which nitrogen is converted into multiple chemical forms as it circulates among aquatic ecosystems. The conversion of nitrogen can be carried out through both biological and physical processes. In a first step of the nitrogen cycle the organic matter is degraded. The degradation of organic matter releases organic nitrogen into ammonia-like compounds. These compounds are then converted into nitrite and nitrate in the presence of oxygen. The nitrate is assimilated by plants or algae. Alternatively, nitrate can be assimilated by other genera of bacteria or denitrified into gaseous nitrogen. The invention relates in particular to the enhancement of the nitrogen cycle in order to rapidly degrade organic matter without the accumulation of nitrate, nitrite, or phosphorus. More in particular, the invention relates to establishing biochemical conditions that are favorable to the bathers and the diversity of the aquatic life.

The levels of bacteria to be used according to the present invention will depend upon the types thereof. It is preferred that the product anticipated by the present invention contains bacteria in an amount between about 10⁵ and 10¹¹ colony forming units (CFU) per mL.

As a proxy for the proper completion of the nitrogen cycle, the species of the bacterial agent were selected on their ability to reduce the biological Oxygen Demand (BOD), the Chemical Oxygen Demand (COD), the phosphor concentration, the nitrate concentration, and the nitrite concentration. The inventors observed that separate species selected from the genera *Bacillus, Paenibacillus,* and *Paracoccus* yielded excellent performances in this regard. Moreover the inventors unexpectedly observed that combinations of species of the genera *Bacillus, Paenibacillus,* and *Paracoccus* yielded a synergistic effect in their overall ability to properly complete the nitrogen cycle. In particular bacterial agents comprising a weight ratio of bacteria selected from the *Paracoccus* genus to bacteria selected from the *Paenibacillus* genus of about 1:1 to 15:1, yielded a complete degradation of the organic matter without the accumulation of nitrate, nitrite, or phosphorus, while still maintaining biochemical conditions that are favorable to the bathers and the diversity of the aquatic life.

In a preferred embodiment of the invention, the bacterial agent comprises bacteria selected from the *Bacillus* genus at a weight ratio of about 65 w/w% to 90 w/w%, more preferably of about 70 w/w% to 87.5 w/w%, most preferably of about 75 w/w% to 85 w/w%.

*Bacillus* growth is optimal under aerobic conditions. Growth under said aerobic conditions generally requires any inorganic nitrogen and phosphorus forms. Under anoxic conditions, nitrate or nitrite are used as an electron acceptor instead of oxygen by facultative anaerobic *Bacillus* species. As ponds are in general strongly aerated, the Bacillus species are responsible for the removal of inorganic nitrogen and phosphorus forms using an oxidative pathway. However, the end of the oxidative pathway of the ammonia is nitrate which can accumulate in the environment. Moreover it is crucial that the nitrate is removed in order to avoid algal growth and its accumulation in the water. The inventors unexpectedly observed that bacterial agents comprising bacillus species at a weight ratio of about 60 w/w% to 95 w/w%, preferably of about 65 w/w% to 90 w/w%, more preferably of about 70 w/w% to 87.5 w/w%, most preferably of about 75 w/w% to 85 w/w%, yielded the greatest results in removing inorganic nitrogen and phosphorus while still maintaining a proper denitrification and biochemical conditions that are favorable to the bathers and the diversity of the aquatic life.

In a preferred embodiment of the invention, the bacterial agent comprises one or more species selected from the *Bacillus* genus, wherein the one or more species selected from the *Bacillus* genus, comprises one or more species selected from the group: *Bacillus pumilus, Bacillus licheniformis, Bacillus amyloliquefaciens, Bacillus circulans,* and *Bacillus subtilis.*

Organic matter content is rich in carbon sources that can be used by heterotrophic microorganisms. Moreover the organic matter is required for both the energy generation as the constitutive maintenance of the cells. The constitutive maintenance of cells requires compounds like phosphorus and nitrogen. As nitrogen may be fixed by diazotrophic bacteria, phosphorus appears to be the most limiting element in aquatic systems. Therefore the phosphorus uptake by heterotrophic bacteria should compete efficiently with the phytoplankton growth.

The ability to degrade organic matter was analyzed for a group of bacteria. Said group comprising, among others, species selected from the genera *Bacillus, Paenibacillus,* and *Paracoccus.* The *Bacillus* species: *Bacillus pumilus, Bacillus licheniformis, Bacillus amyloliquefaciens, Bacillus circulans,* and *Bacillus subtilis* unexpectedly yielded the greatest results when testes separately. Similar results are illustrated in Example 1.

The synergistic reduction of the COD was analyzed for a group of *Bacillus* species. The inventors unexpectedly observed a strong influence of the different strains on the reduction of the COD. The individual performance of the different strains compared to the performance of the different groups can only be explained by strong interactions and anta- and protagonist effects between the different strains. Similar results are illustrated in Example 3. Moreover the inventors unexpectedly observed that bacterial agents comprising different combinations of *Bacillus* species selected from the group: *Bacillus pumilus, Bacillus licheniformis, Bacillus amyloliquefaciens, Bacillus circulans,* and *Bacillus subtilis,* yielded the greatest synergistic effects on the reduction of the COD.

The ability to compete efficiently with the phytoplankton growth was analyzed for a group of *Bacillus* species. All the tested *Bacillus* species had different metabolic activities in different oxygen conditions. Similar results are illustrated in Example 2.

The inventors unexpectedly observed that bacterial agents comprising the *Bacillus* species selected from the group: *Bacillus pumilus, Bacillus licheniformis, Bacillus amyloliquefaciens, Bacillus circulans,* and *Bacillus subtilis,* are active in a wide range of different oxygen conditions. Moreover very few antagonistic effects were observed between said species.

In an embodiment of the invention, the bacterial agent comprises a mixture of 3 species selected from a group comprising the *Bacillus* species: *Bacillus pumilus, Bacillus licheniformis, Bacillus amyloliquefaciens, Bacillus circulans,* and *Bacillus subtilis.*

In a further embodiment of the invention, the bacterial agent comprises a mixture of 3 species selected from a group comprising the *Bacillus* species: *Bacillus pumilus, Bacillus licheniformis, Bacillus amyloliquefaciens, Bacillus circulans,* and *Bacillus subtilis,* wherein the *Bacillus* species are added in equal parts.

Mixtures comprising 3 species selected from a group comprising the *Bacillus* species: *Bacillus pumilus, Bacillus licheniformis, Bacillus amyloliquefaciens, Bacillus circulans,* and *Bacillus subtilis,* yield a great synergistic reduction of phosphorous.

In an embodiment of the invention, the bacterial agent comprises a mixture of the *Bacillus* species: *Bacillus pumilus, Bacillus licheniformis, Bacillus amyloliquefaciens, Bacillus circulans,* and *Bacillus subtilis.*

In a further embodiment of the invention, the bacterial agent comprises a mixture of the *Bacillus* species: *Bacillus pumilus, Bacillus licheniformis, Bacillus amyloliquefaciens, Bacillus circulans,* and *Bacillus subtilis,* wherein the bacterial agent comprises the *Bacillus* species in equal weight ratios.

Mixtures comprising the *Bacillus* species: *Bacillus pumilus, Bacillus licheniformis, Bacillus amyloliquefaciens, Bacillus circulans,* and *Bacillus subtilis,* in equal parts yield unexpectedly a synergistic reduction of phosphorous simultaneously with a synergistic reduction of nitrite.

In a preferred embodiment of the invention, the bacterial agent comprises one or more species selected from the *Paracoccus* genus, wherein the one or more species selected from the *Paracoccus* genus, comprises one or more species selected from the group: *Paracoccus denitrificans, Paracoccus ferrooxidans, Paracoccus haeundaensis, Paracoccus halotolerans, Paracoccus homiensis, Paracoccus kawasakiensis, Paracoccus kocurii, Paracoccus kondratievae, Paracoccus koreensis, Paracoccus marcusii, Paracoccus methylutens, Paracoccus pantotrophus, Paracoccus seriniphilus, Paracoccus solventivorans, Paracoccus alcaliphilus, Paracoccus alkenifer, Paracoccus aminophilus, Paracoccus aminovorans, Paracoccus bengalensis, Paracoccus carotinifaciens, Paracoccus thiocyanatus, Paracoccus thiophilus, Paracoccus versutus, Paracoccus yeei,* and *Paracoccus zeaxanthinifaciens,* preferably *Paracoccus denitrificans, Paracoccus aminovorans,* and *Paracoccus pantotrophus,* most preferably *Paracoccus pantotrophus.*

The end of the oxidative pathway of the ammonia is nitrate, which can accumulate in the environment. It is crucial that nitrate is removed in order to avoid algal growth. To counter this effect, the inventors included species selected from the *Paracoccus* genus. Said species were unexpectedly efficient in their removal of nitrogen, as illustrated in Examples 4 and 5. The *Paracoccus* species: *Paracoccus denitrificans, Paracoccus aminovorans,* and *Paracoccus pantotrophus* were in particularly efficient. Moreover, *Paracoccus pantotrophus* yielded no antagonistic effect against the different *Bacillus* species.

In an embodiment of the invention, the bacterial agent comprises the *Paracoccus* species: *Paracoccus denitrificans, Paracoccus aminovorans,* and *Paracoccus pantotrophus.* In a further embodiment of the invention, the bacterial agent comprises *Paracoccus pantotrophus.*

In an embodiment of the invention, the bacterial agent comprises *Paracoccus pantotrophus* and at least one Bacillus species selected from the group: *Bacillus pumilus, Bacillus licheniformis, Bacillus amyloliquefaciens, Bacillus circulans,* and *Bacillus subtilis.* In a further embodiment of the invention, the *Bacillus* species and *Paracoccus pantotrophus* are added in equal parts. In a further embodiment of the invention, the bacterial agent comprises a weight ratio of bacteria selected from the Bacillus genus to bacteria selected from the *Paracoccus* genus of about 70:1 to 5:1. In a preferred embodiment of the invention, the bacterial agent comprises a weight ratio of bacteria selected from the *Bacillus* genus to bacteria selected from the *Paracoccus* genus of about 70:1 to 5:1, preferably of about 60:1 to 10:1, more preferably of about 50:1 to 15:1, most preferably of about 40:1 to 20:1.

The inventors unexpectedly observed very small antagonistic effects between the *Paracoccus pantotrophus* species and the *Bacillus* species. In particular small antagonistic effects were observed between the *Paracoccus pantotrophus* species and the *Bacillus* species selected from the group: *Bacillus pumilus, Bacillus licheniformis, Bacillus amyloliquefaciens, Bacillus circulans,* and *Bacillus subtilis.* Moreover the performance of the *Bacillus* species with respect to the phosphorous removal was not affected and the excellent nitrogen reduction of *Paracoccus* is maintained. Hence, the result mix is an ideal combination to impoverish the water of biologically filtered pools and ponds, thereby preventing algal growth. Moreover a bacterial agent comprising a weight ratio of bacteria selected from the *Bacillus* genus to bacteria selected from the *Paracoccus* genus of about 70:1 to 5:1 was observed to be particularly efficient in their removal of organic matter without the accumulation of nitrate, nitrite, or phosphorus. Similar results are illustrated in Example 4.

In an embodiment of the invention, the bacterial agent comprises the *Pseudomonas stutzeri* species. In a further embodiment of the invention, the *Pseudomonas stutzeri* species is the *Pseudomonas stutzeri* strain LMG 2243.

The inventors included the *Pseudomonas stutzeri* species, as said species is unexpectedly efficient in their removal of nitrogen.

In a preferred embodiment of the invention, the bacterial agent comprises one or more species selected from the *Paenibacillus* genus, characterized in that the one or more species selected from the *Paenibacillus* genus, comprises one or more species selected from the group: *Paenibacillus alvei, Paenibacillus azotofixans, Paenibacillus dendritiformis, Paenibacillus durum, Paenibacillus koreensis, Paenibacillus larvae, Paenibacillus thailandensis, Paenibacillus macerans, Paenibacillus polymyxa, Paenibacillus popilliae, Paenibacillus tylopili, Paenibacillus vortex, Paenibacillus vulneris,* preferably *Paenibacillus polymyxa* or *Paenibacillus thailandensis,* most preferably *Paenibacillus polymyxa.*

Sunscreen and textiles worn by the bathers are responsible for low concentrations of hydrocarbons in the water of pools, in particular textile dyes and polyvinyl alcohol (PVA). Although the excreted concentrations are low, there is a possibility that said contaminants accumulate and affect the health of the aquatic life as well as the health of the bathers. To degrade these contaminants, *Paenibacillus* species can produce various enzymes that metabolize aliphatic and aromatic organic pollutants, including oxygenases, dehydrogenases, and ligninolytic enzymes. The inventors observed that by incorporating *Paenibacillus* species, the aquatic health of pools can be maintained and the accumulation of contaminants is prevented.

Moreover *Paenibacillus* species produce chitinase enzymes, which is a structural polysaccharide of insect exoskeletons and gut linings, leading to low feeding rates and death of infected insects. By incorporating *Paenibacillus* species in the bacterial agent, the aquatic diversity is maintained and no species can proliferate.

In an embodiment of the invention, the bacterial agent comprises one or more species selected from the group: *Paenibacillus polymyxa* or *Paenibacillus thailandensis.* In a further embodiment of the invention, the bacterial agent comprises the *Paenibacillus polymyxa* specie.

The inventor unexpectedely observed that bacterial agents comprising the *Paenibacillus polymyxa* or *Paenibacillus thailandensis* species, and more in particular the *Paenibacillus polymyxa,* were most efficient in their removal of contaminants originating from for example sunscreen or textile.

In a preferred embodiment of the invention, the bacterial agent comprises a weight ratio of bacteria selected from the *Bacillus* genus to bacteria selected from the *Paenibacillus* genus of about 10:1 to 1:1, preferably of about 7:1 to 2:1, most preferably of about 6:1 to 3:1

The inventors unexpectedly observed that bacterial agents comprising a weight ratio of bacteria selected from the *Bacillus* genus to bacteria selected from the *Paenibacillus* genus of about 10:1 to 1:1, yielded the best results regarding the removal of contaminants, for example originating from sunscreens or textiles, while still retaining the ability to remove inorganic nitrogen and phosphorus.

In a preferred embodiment of the invention, the bacterial agent comprises a weight ratio of bacteria selected from the *Bacillus* genus, to bacteria selected from the *Paracoccus* genus, and to bacteria selected from the *Paenibacillus* genus of about 125:25:1 to 4.5:1.3:1, preferably of about 100:20:1 to 10:2.5:1, most preferably of about 70:15:1 to 15:5:1.

The inventors unexpectedly observed that bacterial agents comprising a weight ratio of bacteria selected from the *Bacillus* genus, to bacteria selected from the *Paracoccus* genus, and to bacteria selected from the *Paenibacillus* genus of about 125:25:1 to 4.5:1.3:1, yielded the best results regarding the removal of contaminants, for example originating from sunscreens or textiles, while still retaining the ability of a complete degradation of organic matter without the accumulation of nitrate, nitrite, or phosphorus.

In a preferred embodiment of the invention, the bacterial agent comprises: a Bacillus pumilus strain at a weight ratio of about 4.0 w/w% to 16 w/w%, preferably of about 6.0 w/w% to 14 w/w%, most preferably of about 7.0 w/w% to 12 w/w%; a Bacillus licheniformis strain at a weight ratio of about 5.0 w/w% to 16 w/w%, preferably of about 7.0 w/w% to 14 w/w%, most preferably of about 8.0 w/w% to 12 w/w%; a Bacillus amyloliquefaciens strain at a weight ratio of about 5.0 w/w% to 16 w/w%, preferably of about 7.0 w/w% to 14 w/w%, most preferably of about 8.0 w/w% to 12 w/w%; a Bacillus circulans strain at a weight ratio of about 5.0 w/w% to 16 w/w%, preferably of about 7.0 w/w% to 14 w/w%, most preferably of about 8.0 w/w% to 12 w/w%; a Bacillus subtilis strain at a weight ratio of about 5.0 w/w% to 16 w/w%, preferably of about 7.0 w/w% to 14 w/w%, most preferably of about 8.0 w/w% to 12 w/w% ; a Paracoccus pantotrophus strain at a weight ratio of about 1.0 w/w% to 7 w/w%, preferably of about 1.5 w/w% to 6.5 w/w%, most preferably of about 3.0 w/w% to 6.0 w/w%; and a Paenibacillus polymyxa strain at a weight ratio of about 7.0 w/w% to 16 w/w%, preferably of about 8.0 w/w% to 14 w/w%, most preferably of about 9.0 w/w% to 12 w/w%.

The inventors unexpectedly observed that bacterial agents comprising : a *Bacillus pumilus* strain at a weight ratio of about 4.0 w/w% to 16 w/w%; a *Bacillus licheniformis* strain at a weight ratio of about 5.0 w/w% to 16 w/w%; a *Bacillus amyloliquefaciens* strain at a weight ratio of about 5.0 w/w% to 16 w/w%; a *Bacillus circulans* strain at a weight ratio of about 5.0 w/w% to 16 w/w%; a *Bacillus subtilis* strain at a weight ratio of about 5.0 w/w% to 16 w/w%; a *Paracoccus pantotrophus* strain at a weight ratio of about 1.0 w/w% to 7 w/w%; and a *Paenibacillus polymyxa* strain at a weight ratio of about 7.0 w/w% to 16 w/w%, yielded even greater results regarding the removal of contaminants, for example originating from sunscreens or textiles, while still retaining the ability of a complete degradation of organic matter without the accumulation of nitrate, nitrite, or phosphorus.

In a preferred embodiment of the invention, the composition is a wettable powder, an aqueous suspension, an aqueous emulsion, or combinations thereof, preferably an aqueous suspension and/or an aqueous emulsion.

By using a wettable powder, an aqueous suspension, an aqueous emulsion, or combinations thereof, the composition is fully dispersed upon addition to water. Compositions that are not fully dispersed upon addition to water have the disadvantage that the contact surface is smaller compared to fully dispersed compositions, thereby limiting the efficiency of the different agents in the composition. In a specific embodiment of the invention, the composition further comprises a dispersing agent.

In a preferred embodiment of the invention, the composition further comprises a conservation agent at a weight ratio of about 10 w/w % to 50 w/w%, preferably about 20 w/w% to 40 w/w%, most preferably about 25 w/w% to 35 w/w%.

For long term conservation, bacteria are typically freeze dried or spray dried. To reactivate bacteria that have been treated in such a way, it takes a few days to a few weeks according to the strains. During that period, the water undergoes significant changes due to the progressive development of all the bacterial strains. As in pools, for example biological swimming pools, no disinfectant can be used to clarify the water, there may be an initial period wherein the pool can be affected by algal bloom. By incorporating a conservation agent, the bacterial agent is protected from damage during freezing, freeze-drying, thawing, storage, or any other manipulation. As the bacterial agent is protected, the reactivation period is shortened and no preactivation of the bacterial agent prior to the addition to water is needed. The inventors observed that concentrations of the conservation agents of about 10 w/w % to 50 w/w% yielded the best results.

In a preferred embodiment of the invention, the conservation agent of the composition is a cryoprotectant, wherein the cryoprotectant is preferably propylene glycol or a variant thereof.

The incorporation of a cryoprotectant specifically protects bacterial cells from damage during freezing, freeze-drying, thawing, or storage. Moreover the inventors observed that propylene glycol yielded the best results, as illustrated in Example 6.

In an embodiment of the invention, propylene glycol is added at a concentration of about 30 w/w%.

In a preferred embodiment of the invention, the composition further comprises an enzyme agent and/or a mineral agent.

The addition of the enzyme agent enables digestion of polymeric materials, thereby reducing the time needed for the degradation of polymeric organic matter or polymeric contaminants. The combination of the bacterial agent with an enzyme agent results in a synergistic effect that allows for the rapid removal of pollutants.

Without the addition of the mineral agent, the growth of the microbes is compromised, which in turn affects their ability to degrade pollutants. The combination of the bacterial agent with a mineral agent results in a synergistic effect that allows for the rapid removal of pollutants.

In a preferred embodiment of the invention, the enzyme agent comprises one or more enzymes selected from the group: peroxidases, lignin peroxidases, laccases, catalases, cytochrome c-oxidases, glucose oxidases, phenol oxidases, n- and o-demethylases, proteases, lipases, alpha-amylases, bacteriocins.

A composition comprising an enzyme agent, exhibits synergy and effectively removes the pollutants from the pool. Enzymes dissociate the pollutant molecules to simpler forms and microbes utilize these simple intermediates in their metabolic activities thereby completely degrading the pollutants in the wastewater. Microbes grow faster due to the increasing availability of simple intermediates and produce more enzymes which can further degrade the pollutants. The addition of the enzyme agent is particularly relevant when the composition is added to a pool for a first time. The enzyme mediated dissociation of the pollutant molecules, thereby aids the initial colonization of the pool.

In a preferred embodiment of the invention, the mineral agent comprises a macro element agent, and a trace element agent, wherein said macro element agent comprises one or more macro elements selected from the group: magnesium sulfate, sodium chloride, sodium carbonate, sodium bicarbonate, calcium chloride, magnesium chloride, magnesium sulfate, and potassium sulfate, preferably sodium carbonate, sodium bicarbonate, calcium chloride, and magnesium sulfate, and wherein said trace element agent comprises one or more ions or compounds of the metals: copper, cobalt, chromium, molybdenum, nickel, wolfram, and zinc.

The macro element agent directly enhances the growth and sustenance of microbes in the pool and/or the filter, which are responsible for utilizing the simpler molecules in their metabolic activities thereby aiding in the complete degradation of the pollutants in the water. Without the nutrients of the macro element agent, growth of the microbes is compromised which in turn affects their ability to degrade pollutants.

The trace element agent comprises of inorganic salts of metal ions, which are necessary for enzyme catalysis facilitating in the bond dissociation of the pollutant molecule, which is of importance as sooner the bond dissociation, sooner is the degradation of the pollutants. In an embodiment of the invention, ferrous sulphate heptahydrate and ferric chloride are added to the composition to provide a mixture of Fe⁺² and Fe⁺³ ions. In the presence of Fe⁺², the enzymes have a more enhanced capacity to catalyze the bond dissociation of the pollutant molecules. Fe⁺² also aids the metabolism of microbial cells. In the absence of Fe⁺², the degradation of pollutants is compromised. In a further embodiment of the invention, hydrogen peroxide is added. Hydrogen peroxide releases molecular oxygen that facilitates enzyme catalysis. Hydrogen peroxide also reacts with Fe⁺² and reduces color by this reaction.

As can be understood, the bacterial agent, the nutrient agent, and the cofactor agent work closely together to facilitate the easy degradation pollutant molecules.

In an embodiment of the invention, the mineral agent comprises one or more salts selected from the group: sodium carbonate, sodium bicarbonate, calcium chloride, and magnesium sulfate. In a further embodiment of the invention, the mineral agent comprises one or more salts selected from the group: sodium carbonate, sodium bicarbonate, calcium chloride, and magnesium sulfate, wherein said salts are dosed in a pool.

The bacterial metabolism of the species comprised in the bacterial agents requires a few days to be effective. During that period algal bloom may occur. As in a true biological pool no disinfectant can be used to clarify the water, it is very difficult to bridge this transition period without algal bloom. Once a pool is affected with algal bloom, a long period must be foreseen in order to re-clarify the pool in a biological matter. Therefore it is of the utmost importance that the during this transition period no algal bloom occurs. Hence, adding an excellent bacterial agent to the water is key but not sufficient. A proper calco carbonic equilibrium is also required. This equilibrium will act as a buffer to prevent significant water quality changes with time, circadian cycles, weather conditions, and most other external parameters. Key to this buffering capacity is the ratio of the global hardness (GH) to the carbonate hardness (KH). The inventors observed that the salts: sodium carbonate, sodium bicarbonate, calcium chloride, and magnesium sulfate, are most suited to maintain the ratio of the global hardness (GH) to the carbonate hardness (KH).

In a third aspect the invention relates to a method for the preparation of the composition.

The bacteria in the bacterial agent, according to the invention may be produced using any standard fermentation process known in the art. For example, solid substrate or submerged liquid fermentation. The fermented cultures can be mixed cultures or single isolates.

In a preferred embodiment of the invention, the species of the bacterial agent are individually fermented and harvested.

In some embodiments the bacteria are aerobically fermented. For those bacteria capable of forming spores, the fermentation process includes a "shock" step to drive the bacteria into spore form. Any "shock" method known in the art is suitable for this process. For example, the fermentation may be heat shocked to achieve sporulation. In some embodiments the bacteria are anaerobically fermented in the presence of carbohydrates. Suitable carbohydrates include inulin, fructo-oligosaccharide, and gluco-oligosaccharides. By individually fermenting and harvesting the different species of the bacterial agent, the composition is easily adjusted. Thus allowing for a greater degree of flexibility during the production. Moreover by fermenting each species separately, each species is grown under conditions optimal for its growth.

In a preferred embodiment of the invention, each of the species of the bacterial agent are individually dried.

After individually fermenting and harvesting each species, the harvested species are individually dried. By individually drying the different species, the composition is easily adjusted. Thus allowing for a greater degree of flexibility during the production. In a specific embodiment of the invention, the dried species are grinded to produce a powder. In a further embodiment of the invention, the grinded species are combined to produce the final preferred compositions.

In an embodiment of the invention, the final microbial mixture has a moisture content of less than about 5% and a final bacterial concentration of between about 10⁵ to 10¹¹ CFU/mL.

The concentration of the mineral agent in the composition depends on actual system parameters of the pool whereto the composition is added. These system parameters include the KH, GH, pH, etc. These system parameters may or may not be determined using a standardized testing kit. The concentration of the mineral agent in the composition may or may not comprises a weight ratio of the mineral agent to the bacterial agent of about 100000:1 to 1:1.

The concentration of the enzyme agent in the composition depends on actual system parameters of the pool whereto the composition is added. These system parameters for example refer to the time since start-up of the pool. As discussed hereabove, the addition of an enzyme agent is particularly relevant when the composition is added to the pool for a first time, as enzyme mediated dissociation of pollutant molecules aids the initial colonization of the pool. The concentration of the enzyme agent in the composition may or may not comprises a weight ratio of the enzyme agent to the bacterial agent of about 1000:1 to 1:1000.

### DESCRIPTION OF FIGURES

The following description of the figures of specific embodiments of the invention is merely exemplary in nature and is not intended to limit the present teachings, their application or uses. Throughout the drawings, corresponding reference numerals indicate alike or corresponding parts and features.

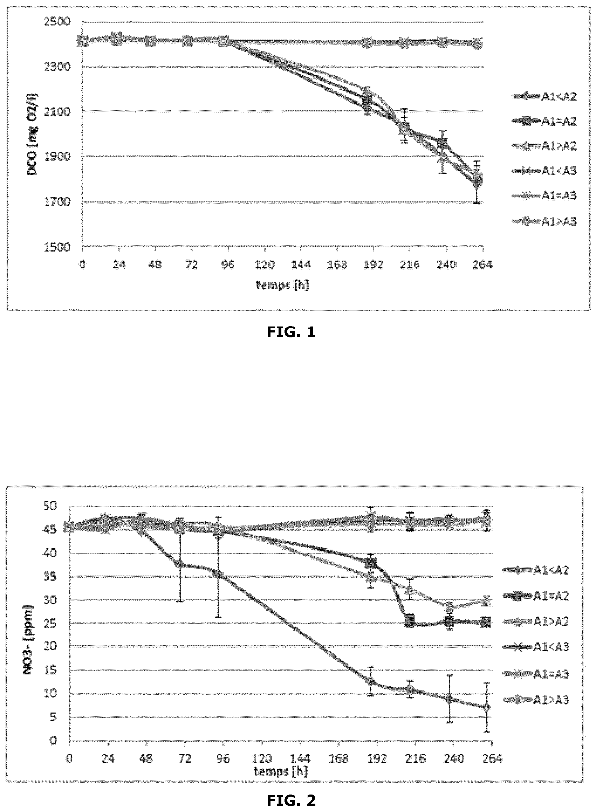

Figure 1 shows a graph on the Chemical Oxygen Demand (COD) for the different combinations of bacterial strains A1, A2 and A3. The Chemical Oxygen Demand (COD) remained constant for 96 hours for all combinations of strains. After 96 hours, the group comprising the combinations of the A1 and A2 strains decreased significantly. The group comprising the combinations of the A1 and A3 strains did not consume at all.
Figure 2 shows a graph on the variation of the consumption of nitrate for the different combinations of bacterial strains A1, A2 and A3. The group comprising the A1 and A2 combinations was the most performant in the assimilation of large quantities of nitrate. Moreover the group comprising the A1 and A2 combinations were more performant when higher concentrations of the A2 strain were foreseen in the combination. The groups comprising the A1 and A3 combinations did not consume any nitrate.

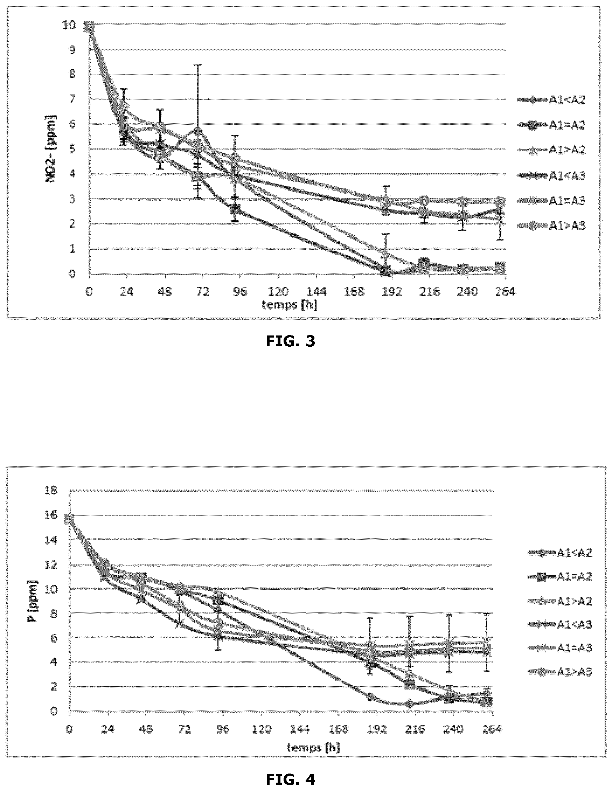

Figure 3 shows a graph on the variation of the consumption of nitrite for the different combinations of bacterial strains A1, A2 and A3. A reduction of the nitrite concentration is observed for all combination of bacterial strains. The group comprising the A1 and A2 combinations were able to completely remove the nitrate from the water.
Figure 4 shows a graph on the variation of the consumption of inorganic phosphorus for the different combinations of bacterial strains A1, A2 and A3. A reduction of the phosphorus concentration is observed for all combination of bacterial strains. The group comprising the A1 and A2 combinations were able to completely remove the phosphorus from the water. A faster degradation is observed when the group comprises a higher concentration of A1 compared to A2.

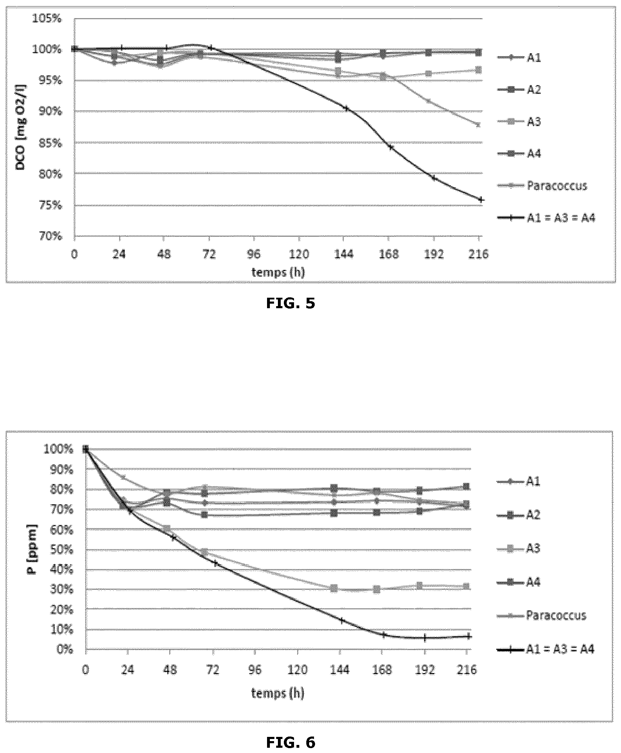

Figure 5 shows a graph on the COD of pure strains and the group comprising the combination of the A1, A2, and A3 strains in equal parts. The group comprising the combination of the A1, A2, and A3 strains in equal parts, yielded the greatest reduction of the COD, followed by the *Paracoccus* species.
Figure 6 shows a graph on the variation of the concentration of inorganic phosphorus for pure strains and the group comprising the combination of the A1, A2, and A3 strains in equal parts. The group comprising the combination of the A1, A2, and A3 strains in equal parts, yielded the greatest reduction of phosphorous, followed by the *Paracoccus* species.

The present invention is in no way limited to the embodiments shown in the figures. On the contrary, methods according to the present invention may be realized in many different ways without departing from the scope of the invention.

### EXAMPLES

The invention is further described by the following non-limiting examples which further illustrate the invention, and are not intended to, nor should they be interpreted to, limit the scope of the invention.

### Example 1

Example 1 relates to the biodegradation efficiency of bacteria selected from microorganism collections and isolated specimens from aquatic environments. Said bacteria comprise, among others, species selected from the genera *Bacillus, Paenibacillus,* and *Paracoccus.* All tested species were incubated separately with an organic sediment sampled from a pond. A first observation made by the inventors was that bacteria of the *Bacillus* genus were most efficient in degrading organic matter. The most efficient *Bacillus* species are referred to hereunder as A1 to A4. The inoculation rate for the biological treatments varies from 6.0 E+5 to 7.4 E+7 CFU/ml. For all these strains, the inventors followed the oxygen demand in the pond sediment for 24 hour periods during 5 days. The table hereunder illustrates these results. The values are expressed in O₂ mg.L⁻¹.h⁻¹. As the species A1 to A4 were the most efficient in degrading organic matter, they were used as the starting point for future examples and the composition.

| **Treatments** | **control** | | **A1** | | **A2** | | **A3** | | **A4** | |
|---|---|---|---|---|---|---|---|---|---|---|
| **Period** | **mean** | **± SD** | **mean** | **± SD** | **mean** | **± SD** | **mean** | **± SD** | **mean** | **± SD** |
| 0-24 | 2,31 | 0,68 | 2,90 | 0,79 | 4,05 | 0,61 | 3,38 | 0,94 | 3,79 | 0,95 |
| 24-48 | 2,53 | 0,99 | 3,22 | 1,02 | 3,52 | 1,38 | 2,81 | 0,97 | 3,05 | 1,14 |
| 48-72 | 1,91 | 0,68 | 2,31 | 0,99 | 2,60 | 0,95 | 2,18 | 0,66 | 2,21 | 0,58 |
| 72-96 | 1,25 | 0,85 | 1,30 | 0,58 | 2,31 | 0,63 | 1,75 | 0,93 | 1,89 | 0,55 |
| 96-120 | 1,70 | 0,64 | 1,61 | 1,04 | 2,13 | 1,26 | 1,80 | 0,84 | 1,34 | 0,97 |

### Example 2

Example 2 relates to the ability of a group of species to compete efficiently with the phytoplankton growth. The species that were analyzed are referred to hereunder as A1 to A4. Organic matter content is rich in carbon sources that can be used by heterotrophic microorganisms. Moreover the organic matter is required for both the energy generation as the constitutive maintenance of the cells. The constitutive maintenance of cells requires compounds like phosphorus and nitrogen. As nitrogen may be fixed by diazotrophic bacteria, phosphorus appears to be the most limiting element in aquatic systems. Therefore the phosphorus uptake by heterotrophic bacteria should compete efficiently with the phytoplankton growth.

Aerobic conditions are suited for Bacillus growth, which generally requires any inorganic nitrogen and phosphorus forms. Under anoxic condition, only facultative anaerobic Bacillus species are able to use nitrate or nitrite as electron acceptor in place of oxygen (A4 is classically a strict aerobic which is unable to uptake phosphate in anoxic conditions). Moreover the lack of oxygen reduce energetic balance. As a consequence, assimilated phosphorus by unit of COD (Chemical Oxygen Demand) is also negatively affected by the absence of oxygen. For strain A3, the assimilated phosphorus by unit of COD is reduced twice under anoxic condition. The phosphorous content is referred to hereunder as P.

| **mg P/g COD** | | | | |
|---|---|---|---|---|
| **Condition** | **Aerobic** | | **Anoxic** | |
| | **Mean** | **± SD** | **Mean** | **± SD** |
| **A1** | -13,6 | 1,1 | -13,5 | 1,1 |
| **A2** | -17,0 | 0,1 | -14,5 | 3,2 |
| **A3** | -27,8 | 0,6 | -13,7 | 2,4 |
| **A4** | -37,7 | 14,6 | x | x |
| **P** | -3,8 | 4,5 | 1,5 | 0,6 |

Based on these results, the inventors were able to select the strains according to the oxygen conditions, aerobic or anaerobic. The strains A3 and A4 are the most efficient ones in aerobic conditions while A1, A2 and A3 presents similarly metabolic activities in anaerobic conditions. A4 was the only strain that is a strictly aerobic bacteria.

### Example 3

Example 3 relates to the analysis of the proper completion of the nitrogen cycle. As a proxy for the proper completion of the nitrogen cycle, the selected strains were tested on their ability to reduce the COD, the phosphorous concentration, the nitrate concentration, and the nitrite concentration. The species that were analyzed are referred to hereunder as A1 to A4. The strains are combined according to the following distribution.

| | **A1** | **A2** | **A3** |
|---|---|---|---|
| **A1<A2** | 20% | 80% | / |
| **A1=A2** | 50% | 50% | / |
| **A1>A2** | 80% | 20% | / |
| **A1<A3** | 20% | / | 80% |
| **A1=A3** | 50% | / | 50% |
| **A1>A3** | 80% | / | 20% |

Using initial inoculation concentration of 10⁶ CFU/ml on water containing nitrates, nitrites, ammonium and inorganic phosphorus at the following concentrations: 50, 10, 25, and 12 ppm. The activity of the different groups was monitored over 11 days.

The results are illustrated in Figures 1 to 4. The COD remained constant for 96 hours for all combinations of strains. After 96 hours, the groups comprising the A1 and A2 combinations and the A1 and A3 combinations unexpectedly increased their consumption of organic matter. The group comprising the A1 and A2 combinations are the most performant in the assimilation of large quantities of nitrate. Moreover the group comprising the A1 and A2 combinations were more performant, when higher concentrations of the A2 strain were foreseen in the combination. The group comprising the A1 and A3 combinations did not consume any nitrate. A reduction of the nitrite concentration is observed for all combinations of bacterial strains. The group comprising the A1 and A2 combinations were able to completely remove nitrate from water. A reduction of the phosphorus concentration is observed for all combination of bacterial strains. The group comprising the A1 and A2 combinations were able to completely remove the phosphorus concentration from the water. A faster degradation is observed when the group comprises a higher concentration of A1 compared to A2.

In conclusion, the results showed a strong influence of the difference strains on the performances. The individual performances of the different strains can only be explained by strong interactions and anta- and protagonist effects between the different strains.

### Example 4

Example 4 relates to the analysis of the proper completion of the nitrogen cycle. As a proxy for the proper completion of the nitrogen cycle, the selected strains were tested on their ability to reduce the COD, the phosphorous concentration, and the nitrite concentration. The species that were analyzed are referred to hereunder as A1 to A4. The strains are combined in groups of 3 or groups of 4. All strains were added in equal parts. The *Paracoccus* species were analyzed separately. The activity of the different groups was monitored over 11 days.

Figures 5 and 6 respectively illustrate the reduction of the COD and the reduction of the phosphorous concentration. The group comprising the combination of the A1, A2, and A3 strains in equal parts, yielded the greatest reduction of the COD, followed by the *Paracoccus* species. Similarly, the group comprising the combination of the A1, A2, and A3 strains in equal parts, yielded the greatest reduction of phosphorous, followed by the *Paracoccus* species.

To summarize, all the combinations for the reduction of phosphorus and of nitrite were classified. The ranking has been established based on the performance after 72h. Then treatments allowing for over 85% decrease of inorganic phosphorus in 168h have been highlighted in both tables. The table below illustrates the reduction of the nitrite concentration. The highest reduction of the nitrite concentration was observed after 168 hours at 79%, for the group comprising the combination of the A1, A3, and A4 strains in equal parts

| **Combinations** | **Reduction of NO₂⁻** | |
|---|---|---|
| | **72 h** | **168h** |
| **A1 = A2 = A3** | 50% | 58% |
| **A1 = A2 = A4** | 59% | 70% |
| **A1 = A3 = A4** | 49% | 79% |
| **A2 = A3 = A4** | 52% | 63% |
| **A1** = **A2** = **A3** = **A4** | 52% | 64% |

The results of the phosphorous and nitrite reduction are summarized in the table below. The group that comprises the combination of the A1, A2, and A3 strains in equal parts yielded the greatest reduction in phosphorous concentration. However, the greatest overall reduction of both the phosphorous and the nitrite concentration was observed for the group comprising the combination of the A1, A2, A3, and A4 strains in equal parts.

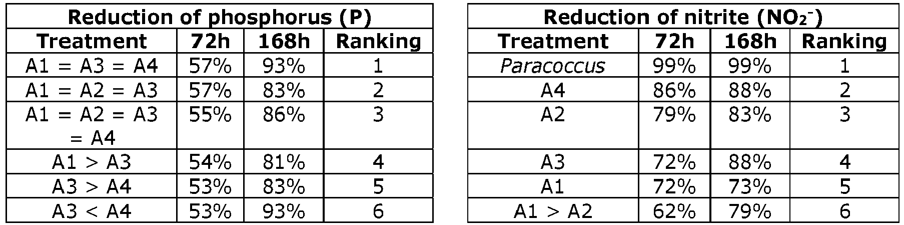

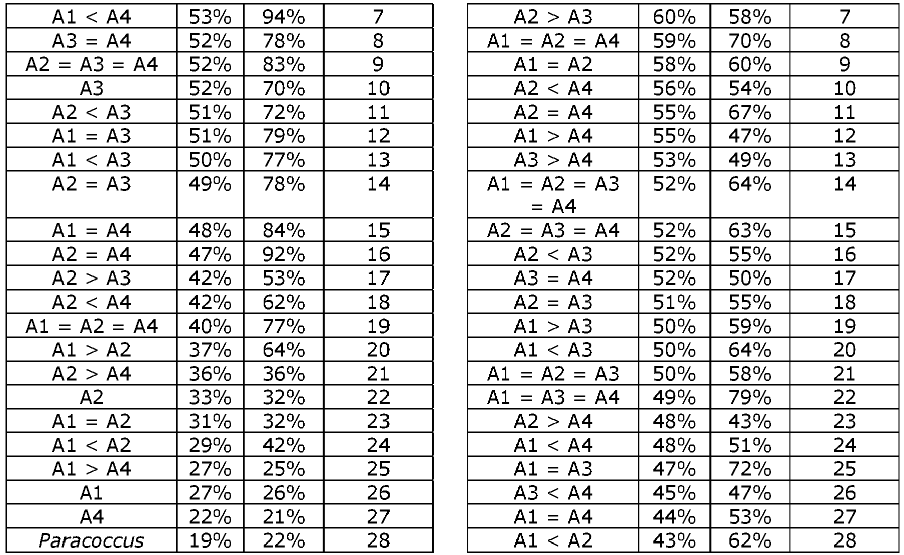

In conclusion, the results showed a strong influence of the difference strains on the performances. The individual performances of the different strains can only be explained by strong interactions and anta- and protagonist effects between the different strains.

### Example 5

Example 5 relates to the analysis of the ability of the different strains to reduce nitrate into gaseous nitrogen. As illustrated by the previous examples, the inventors selected combinations of bacterial strains that are able to properly complete the nitrogen cycle. However, the end of the oxidative pathway of the nitrogen cycle is nitrate, which can accumulate in the environment. Hence, in order to avoid algal growth nitrate must be removed.

Bacteria were selected from microorganism collections and isolated specimens from aquatic environments. Said bacteria comprise, among others, species selected from the genera *Bacillus, Paenibacillus,* and *Paracoccus,* which were subsequently analyze based on their ability to reduce nitrate into gaseous nitrogen. The enzymatic activity of the nitric oxide reductase (Nor) and the nitrous oxide reductase (Nos) was analyzed for all the different species. *Paracoccus sp.* yielded a poor contribution to the reduction of phosphorus but a maximum reduction of nitrite and nitrate. Moreover, unexpectedly no antagonistic effect was observed between the *Paracoccus sp.* and the different *Bacillus species.* These results were in particular relevant for *Paracoccus pantotrophus* strains.

### Example 6

Example 6 relates to the faster reactivation of the bacteria. For long term conservation, bacteria are typically freeze dried or spray dried. To reactivate bacteria that have been treated in such a way, it takes between a few days to a few weeks according to the strains. During that period the water undergoes significant changes due to the progressive development of all the bacterial strains. Hence, there may be an initial period when enriching the bio filtration when the pool can be affected by algal bloom.

To reduce this period, a faster reactivation of the bacteria used in the composition, is required. The inventors performed a series of experiments using different conservation agents. On average the addition of the different conservation agents resulted in a decreased reactivation time of 15 to 20 days to 10 to 14 days. Long term conservation of the bacteria in 30% propylene glycol unexpectedly allows for the fastest reactivation of all the tested conservation agents. For concentrations of about 30 w/w% propylene glycol, the reactivation time decreased from 15 to 20 days to 2 to 5 days, suggesting an strong interaction between propylene glycol and the different constituents of the composition.

### Example 7

Example 7 relates to a simple composition according to the current invention. The simple composition comprises only a bacterial agent. Said bacterial agent comprises a mixture of species selected from the genera *Bacillus, Paenibacillus,* and *Paracoccus.*

Examples of the composition according to the current invention are illustrated below. The bacterial concentrations are expressed in CFU/mL.

| | **Example A** | **Example B** | **Example C** | **Example D** |
|---|---|---|---|---|
| ***Bacillus circulans*** | 5,00E+07 | 2,33E+07 | 2,75E+07 | 2,75E+07 |
| ***Bacillus lichenformis*** | 5,00E+07 | 1,80E+07 | 2,75E+07 | 2,75E+07 |
| ***Bacillus amyloliquefaciens*** | 5,00E+07 | 1,80E+07 | 2,75E+07 | 2,75E+07 |
| ***Bacillus pumilis*** | 5,00E+07 | 1,49E+07 | 2,75E+07 | 2,75E+07 |
| ***Bacillus subtilis*** | 5,00E+07 | 1,88E+07 | 2,75E+07 | 2,75E+07 |
| ***Phaenibacillus polymixa*** | 5,00E+07 | 3,00E+07 | 2,75E+07 | 2,75E+07 |
| ***Paracoccus sp.*** | 2,00E+07 | 1,00E+07 | 2,00E+06 | 5,00E+06 |

## Claims

1. A composition suitable for optimizing a biological treatment of swimming pools, wherein the composition comprises a bacterial agent, and wherein said bacterial agent comprises a mixture of species selected from the genera *Bacillus, Paenibacillus,* and *Paracoccus,* **characterized in that** the bacterial agent comprises a weight ratio of bacteria selected from the *Paracoccus* genus to bacteria selected from the *Paenibacillus* genus of about 1:1 to 15:1, preferably of about 2:1 to 13:1, most preferably of about 3:1 to 10:1, wherein the bacterial agent comprises bacteria selected from the *Bacillus* genus at a weight ratio of about 60 w/w% to 95 w/w%.

2. The composition according to preceding claim 1, **characterized in that** the bacterial agent comprises bacteria selected from the *Bacillus* genus at a weight ratio of about 65 w/w% to 90 w/w%, more preferably of about 70 w/w% to 87.5 w/w%, most preferably of about 75 w/w% to 85 w/w%.

3. The composition according to any of the preceding claims 1 or 2, **characterized in that** the bacterial agent comprises a weight ratio of bacteria selected from the *Bacillus* genus to bacteria selected from the *Paracoccus* genus of about 70:1 to 5:1, preferably of about 60:1 to 10:1, more preferably of about 50:1 to 15:1, most preferably of about 40:1 to 20:1.

4. The composition according to any of the preceding claims 1 to 3, **characterized in that** the bacterial agent comprises a weight ratio of bacteria selected from the *Bacillus* genus to bacteria selected from the *Paenibacillus* genus of about 10:1 to 1:1, preferably of about 7:1 to 2:1, most preferably of about 6:1 to 3:1.

5. The composition according to any of the preceding claims 1 to 4, **characterized in that** the bacterial agent comprises a weight ratio of bacteria selected from the *Bacillus* genus, to bacteria selected from the *Paracoccus* genus, and to bacteria selected from the *Paenibacillus* genus of about 125:25:1 to 4.5:1.3:1, preferably of about 100:20:1 to 10:2.5:1, most preferably of about 70:15:1 to 15:5:1.

6. The composition according to any of the preceding claims 1 to 5, wherein the bacterial agent comprises one or more species selected from the *Bacillus* genus, **characterized in that** the one or more species selected from the *Bacillus* genus, comprises one or more species selected from the group: *Bacillus pumilus, Bacillus licheniformis, Bacillus amyloliquefaciens, Bacillus circulans,* and *Bacillus subtilis.*

7. The composition according to any of the preceding claims 1 to 6, **characterized in that** the bacterial agent comprises:
- a *Bacillus pumilus* strain at a weight ratio of about 4.0 w/w% to 16 w/w%, preferably of about 6.0 w/w% to 14 w/w%, most preferably of about 7.0 w/w% to 12 w/w%;
- a *Bacillus licheniformis* strain at a weight ratio of about 5.0 w/w% to 16 w/w%, preferably of about 7.0 w/w% to 14 w/w%, most preferably of about 8.0 w/w% to 12 w/w%;
- a *Bacillus amyloliquefaciens* strain at a weight ratio of about 5.0 w/w% to 16 w/w%, preferably of about 7.0 w/w% to 14 w/w%, most preferably of about 8.0 w/w% to 12 w/w%;
- a *Bacillus circulans* strain at a weight ratio of about 5.0 w/w% to 16 w/w%, preferably of about 7.0 w/w% to 14 w/w%, most preferably of about 8.0 w/w% to 12 w/w%;
- a *Bacillus subtilis* strain at a weight ratio of about 5.0 w/w% to 16 w/w%, preferably of about 7.0 w/w% to 14 w/w%, most preferably of about 8.0 w/w% to 12 w/w% ;
- a *Paracoccus pantotrophus* strain at a weight ratio of about 1.0 w/w% to 7 w/w%, preferably of about 1.5 w/w% to 6.5 w/w%, most preferably of about 3.0 w/w% to 6.0 w/w%; and
- a *Paenibacillus polymyxa* strain at a weight ratio of about 7.0 w/w% to 16 w/w%, preferably of about 8.0 w/w% to 14 w/w%, most preferably of about 9.0 w/w% to 12 w/w% ;

8. The composition according to any of the preceding claims 1 to 7, **characterized in that** the composition is a wettable powder, an aqueous suspension, an aqueous emulsion, or combinations thereof, preferably an aqueous suspension and/or an aqueous emulsion.

9. The composition according to any of the preceding claims 1 to 8, **characterized in that** the composition further comprises a conservation agent at a weight ratio of about 10 w/w % to 50 w/w%, preferably about 20 w/w% to 40 w/w%, most preferably about 25 w/w% to 35 w/w%.

10. The composition according to any of the preceding claims 1 to 9, wherein the conservation agent of the composition is a cryoprotectant, wherein the cryoprotectant is preferably propylene glycol or a variant thereof.

11. The composition according to any of the preceding claims 1 to 10, **characterized in that** the composition further comprises an enzyme agent and/or a mineral agent.

12. The composition according to claim 11, wherein the enzyme agent comprises one or more enzymes selected from the group: peroxidases, lignin peroxidases, laccases, catalases, cytochrome c-oxidases, glucose oxidases, phenol oxidases, n- and o-demethylases, proteases, lipases, alpha-amylases, bacteriocins.

13. The composition according to any of the preceding claims 1 to 12, wherein the mineral agent comprises a macro element agent, and a trace element agent, wherein said macro element agent comprises one or more macro elements selected from the group: magnesium sulfate, sodium chloride, sodium carbonate, sodium bicarbonate, calcium chloride, magnesium chloride, magnesium sulfate, and potassium sulfate, preferably sodium carbonate, sodium bicarbonate, calcium chloride, and magnesium sulfate, and wherein said trace element agent comprises one or more ions or compounds of the metals: copper, cobalt, chromium, molybdenum, nickel, wolfram, and zinc

14. Use of the composition according to any of the preceding claims 1 to 13 in swimming pools, and most preferably in biological swimming pools.

15. A method for the preparation of the composition as claimed in any of the preceding claims 1 to 13, wherein each of the species of the bacterial agent are individually fermented and harvested, wherein each of the species of the bacterial agent are individually dried.

## Patentansprüche

1. Zusammensetzung, die geeignet ist, eine biologische Behandlung von Schwimmbädern zu optimieren, wobei die Zusammensetzung ein bakterielles Mittel umfasst, und wobei das bakterielle Mittel ein Gemisch von Arten umfasst, die aus den *Gattungen Bacillus, Paenibacillus* und *Paracoccus* ausgewählt sind, **dadurch gekennzeichnet, dass** das bakterielle Mittel ein Gewichtsverhältnis von Bakterien, ausgewählt aus der Gattung *Paracoccus,* zu Bakterien, ausgewählt aus der Gattung *Paenibacillus,* von etwa 1:1 bis 15:1, vorzugsweise von etwa 2:1 bis 13:1, am meisten bevorzugt von etwa 3:1 bis 10:1, umfasst, wobei das bakterielle Mittel Bakterien, ausgewählt aus der Gattung *Bacillus,* in einem Gewichtsverhältnis von etwa 60 Gew./Gew.-% bis 95 Gew./Gew.-% umfasst.

2. Zusammensetzung nach dem vorhergehenden Anspruch 1, **dadurch gekennzeichnet, dass** das bakterielle Mittel Bakterien, ausgewählt aus der Gattung *Bacillus,* in einem Gewichtsverhältnis von etwa 65 Gew./Gew.-% bis 90 Gew./Gew.-%, noch bevorzugter von etwa 70 Gew./Gew.-% bis 87,5 Gew./Gew.-%, am meisten bevorzugt von etwa 75 Gew./Gew.-% bis 85 Gew./Gew.-% umfasst.

3. Zusammensetzung nach einem der vorhergehenden Ansprüche 1 oder 2, **dadurch gekennzeichnet, dass** das bakterielle Mittel ein Gewichtsverhältnis von Bakterien, ausgewählt aus der Gattung *Bacillus,* zu Bakterien, ausgewählt aus der Gattung *Paracoccus,* von etwa 70:1 bis 5:1, vorzugsweise von etwa 60:1 bis 10:1, noch bevorzugter von etwa 50:1 bis 15:1, am meisten bevorzugt von etwa 40:1 bis 20:1 umfasst.

4. Zusammensetzung nach einem der vorhergehenden Ansprüche 1 bis 3, **dadurch gekennzeichnet, dass** das bakterielle Mittel ein Gewichtsverhältnis von Bakterien, ausgewählt aus der Gattung *Bacillus,* zu Bakterien, ausgewählt aus der Gattung *Paenibacillus,* von etwa 10:1 bis 1:1, vorzugsweise von etwa 7:1 bis 2:1, am meisten bevorzugt von etwa 6:1 bis 3:1 umfasst.

5. Zusammensetzung nach einem der vorhergehenden Ansprüche 1 bis 4, **dadurch gekennzeichnet, dass** das bakterielle Mittel ein Gewichtsverhältnis von Bakterien, ausgewählt aus der Gattung *Bacillus,* zu Bakterien, ausgewählt aus der Gattung *Paracoccus,* und zu Bakterien, ausgewählt aus der Gattung *Paenibacillus,* von etwa 125:25:1 bis 4,5:1,3:1, vorzugsweise von etwa 100:20:1 bis 10:2,5:1, am meisten bevorzugt von etwa 70:15:1 bis 15:5:1 umfasst.

6. Zusammensetzung nach einem der vorhergehenden Ansprüche 1 bis 5, wobei das bakterielle Mittel eine oder mehrere Spezies umfasst, die aus der Gattung *Bacillus* ausgewählt sind, **dadurch gekennzeichnet, dass** die eine oder mehreren Spezies, die aus der Gattung *Bacillus* ausgewählt sind, eine oder mehrere Spezies umfassen, die aus folgender Gruppe ausgewählt sind: *Bacillus pumilus, Bacillus licheniformis, Bacillus amyloliquefaciens, Bacillus circulans,* und *Bacillus subtilis.*

7. Zusammensetzung nach einem der vorhergehenden Ansprüche 1 bis 6, **dadurch gekennzeichnet, dass** das bakterielle Mittel umfasst:
- einen *Bacillus pumilus*-Stamm in einem Gewichtsverhältnis von etwa 4,0 Gew./Gew.-% bis 16 Gew./Gew.-%, vorzugsweise von etwa 6,0 Gew./Gew.-% bis 14 Gew./Gew.-%, am meisten bevorzugt von etwa 7,0 Gew./Gew.-% bis 12 Gew./Gew.-%,
- einen *Bacillus licheniformis*-Stamm in einem Gewichtsverhältnis von etwa 5,0 Gew./Gew.-% bis 16 Gew./Gew.-%, vorzugsweise von etwa 7,0 Gew./Gew.- % bis 14 Gew./Gew.-%, am meisten bevorzugt von etwa 8,0 Gew./Gew.-% bis 12 Gew./Gew.-%,
- einen *Bacillus amyloliquefaciens*-Stamm in einem Gewichtsverhältnis von etwa 5,0 Gew./Gew.-% bis 16 Gew./Gew.-%, vorzugsweise von etwa 7,0 Gew./Gew.-% bis 14 Gew./Gew.-%, am meisten bevorzugt von etwa 8,0 Gew./Gew.- % bis 12 Gew./Gew.-%,
- einen *Bacillus circulans*-Stamm in einem Gewichtsverhältnis von etwa 5,0 Gew./Gew.-% bis 16 Gew./Gew.-%, vorzugsweise von etwa 7,0 Gew./Gew.-% bis 14 Gew./Gew.-%, am meisten bevorzugt von etwa 8,0 Gew./Gew.-% bis 12 Gew./Gew.-%;
- einen *Bacillus subtilis*-Stamm in einem Gewichtsverhältnis von etwa 5,0 Gew./Gew.-% bis 16 Gew./Gew.-%, vorzugsweise von etwa 7,0 Gew./Gew.-% bis 14 Gew./Gew.-%, am meisten bevorzugt von etwa 8,0 Gew./Gew.-% bis 12 Gew./Gew.- %;
- einen *Paracoccus pantotrophus*-Stamm in einem Gewichtsverhältnis von etwa 1,0 Gew./Gew.-% bis 7 Gew./Gew.-%, vorzugsweise von etwa 1,5 Gew./Gew.-% bis 6,5 Gew./Gew.-%, am meisten bevorzugt von etwa 3,0 Gew./Gew.- % bis 6,0 Gew./Gew.-%, und
- einen *Paenibacillus polymyxa*-Stamm in einem Gewichtsverhältnis von etwa 7,0 Gew./Gew.-% bis 16 Gew./Gew.-%, vorzugsweise von etwa 8,0 Gew./Gew.- % bis 14 Gew./Gew.-%, am meisten bevorzugt von etwa 9,0 Gew./Gew.-% bis 12 Gew./Gew.-%,

8. Zusammensetzung nach einem der vorhergehenden Ansprüche 1 bis 7, **dadurch gekennzeichnet, dass** die Zusammensetzung ein benetzbares Pulver, eine wässrige Suspension, eine wässrige Emulsion oder Kombinationen davon ist, vorzugsweise eine wässrige Suspension und/oder eine wässrige Emulsion.

9. Zusammensetzung nach einem der vorhergehenden Ansprüche 1 bis 8, **dadurch gekennzeichnet, dass** die Zusammensetzung ferner ein Konservierungsmittel in einem Gewichtsverhältnis von etwa 10 Gew./Gew.-% bis 50 Gew./Gew.-%, vorzugsweise etwa 20 Gew./Gew.-% bis 40 Gew./Gew.-%, am meisten bevorzugt etwa 25 Gew./Gew.-% bis 35 Gew./Gew.-%, umfasst.

10. Zusammensetzung nach einem der vorhergehenden Ansprüche 1 bis 9, wobei das Konservierungsmittel der Zusammensetzung ein Kälteschutzmittel ist, wobei das Kälteschutzmittel vorzugsweise Propylenglykol oder eine Variante davon ist.

11. Zusammensetzung nach einem der vorangehenden Ansprüche 1 bis 10, **dadurch gekennzeichnet, dass** die Zusammensetzung ferner ein Enzymmittel und/oder ein Mineralmittel enthält.

12. Zusammensetzung nach Anspruch 11, wobei das Enzymmittel ein oder mehrere Enzyme umfasst, ausgewählt aus der Gruppe: Peroxidasen, Ligninperoxidasen, Laccasen, Katalasen, Cytochrom c-Oxidasen, Glucoseoxidasen, Phenoloxidasen, n- und o-Demethylasen, Proteasen, Lipasen, alpha-Amylasen, Bacteriocinen.

13. Zusammensetzung nach einem der vorhergehenden Ansprüche 1 bis 12, wobei das Mineralmittel ein Makroelementmittel und ein Spurenelementmittel umfasst, wobei das Makroelementmittel ein oder mehrere Makroelemente umfasst, ausgewählt aus der Gruppe: Magnesiumsulfat, Natriumchlorid, Natriumcarbonat, Natriumbicarbonat, Calciumchlorid, Magnesiumchlorid, Magnesiumsulfat, und Kaliumsulfat, vorzugsweise Natriumcarbonat, Natriumbicarbonat, Kalziumchlorid und Magnesiumsulfat, und wobei das Spurenelementmittel ein oder mehrere Ionen oder Verbindungen der folgenden Metalle umfasst: Kupfer, Kobalt, Chrom, Molybdän, Nickel, Wolfram und Zink.

14. Verwendung der Zusammensetzung nach einem der vorhergehenden Ansprüche 1 bis 13 in Schwimmbädern, und am meisten bevorzugt in biologischen Schwimmbädern.

15. Verfahren zur Herstellung der Zusammensetzung nach einem der vorhergehenden Ansprüche 1 bis 13, wobei jede der Arten des bakteriellen Mittels einzeln fermentiert und geerntet wird, wobei jede der Arten des bakteriellen Mittels einzeln getrocknet wird.

## Revendications

1. Composition appropriée pour optimiser un traitement biologique de piscines, dans laquelle la composition comprend un agent bactérien, et dans laquelle ledit agent bactérien comprend un mélange d'espèces choisies parmi les genres *Bacillus, Paenibacillus* et *Paracoccus,* **caractérisée en ce que** l'agent bactérien comprend un rapport pondéral de bactéries choisies dans le genre *Paracoccus* aux bactéries choisies dans le genre *Paenibacillus* d'environ 1:1 à 15:1, de préférence d'environ 2:1 à 13:1, de manière préférée entre toutes d'environ 3:1 à 10:1, dans laquelle l'agent bactérien comprend des bactéries choisies dans le genre *Bacillus* à un rapport pondéral d'environ 60 % en p/p à 95 % en p/p.

2. Composition selon la revendication 1 précédente, **caractérisée en ce que** l'agent bactérien comprend des bactéries choisies dans le genre *Bacillus* à un rapport pondéral d'environ 65 % en p/p à 90 % en p/p, de manière davantage préférée d'environ 70 % en p/p à 87,5 % en p/p, de manière préférée entre toutes d'environ 75 % en p/p à 85 % en p/p.

3. Composition selon l'une quelconque des revendications 1 ou 2 précédentes, **caractérisée en ce que** l'agent bactérien comprend un rapport pondéral de bactéries choisies dans le genre *Bacillus* aux bactéries choisies dans le genre *Paracoccus* d'environ 70:1 à 5:1, de préférence d'environ 60:1 à 10:1, de manière davantage préférée d'environ 50:1 à 15:1, de manière préférée entre toutes d'environ 40:1 à 20:1.

4. Composition selon l'une quelconque des revendications 1 à 3 précédentes, **caractérisée en ce que** l'agent bactérien comprend un rapport pondéral de bactéries choisies dans le genre *Bacillus* aux bactéries choisies dans le genre *Paenibacillus* d'environ 10:1 à 1:1, de préférence d'environ 7:1 à 2:1, de manière préférée entre toutes d'environ 6:1 à 3:1.

5. Composition selon l'une quelconque des revendications 1 à 4 précédentes, **caractérisée en ce que** l'agent bactérien comprend un rapport pondéral de bactéries choisies dans le genre *Bacillus,* aux bactéries choisies dans le genre *Paracoccus,* et aux bactéries choisies dans le genre *Paenibacillus* d'environ 125:25:1 à 4,5:1,3:1, de préférence d'environ 100:20:1 à 10:2,5:1, de manière préférée entre toutes d'environ 70:15:1 à 15:5:1.

6. Composition selon l'une quelconque des revendications 1 à 5 précédentes, dans laquelle l'agent bactérien comprend une ou plusieurs espèces choisies dans le genre *Bacillus,* **caractérisée en ce que** les une ou plusieurs espèces choisies dans le genre *Bacillus,* comprennent une ou plusieurs espèces choisies dans le groupe : *Bacillus pumilus, Bacillus licheniformis, Bacillus amyloliquefaciens, Bacillus circulans* et *Bacillus subtilis.*

7. Composition selon l'une quelconque des revendications 1 à 6 précédentes, **caractérisée en ce que** l'agent bactérien comprend :
- une souche *Bacillus pumilus* à un rapport pondéral d'environ 4,0 % en p/p à 16 % en p/p, de préférence d'environ 6,0 % en p/p à 14 % en p/p, de manière préférée entre toutes d'environ 7,0 % en p/p à 12 % en p/p ;
- une souche *Bacillus licheniformis* à un rapport pondéral d'environ 5,0 % en p/p à 16 % en p/p, de préférence d'environ 7,0 % en p/p à 14 % en p/p, de manière préférée entre toutes d'environ 8,0 % en p/p à 12 % en p/p ;
- une souche *Bacillus amyloliquefaciens* à un rapport pondéral d'environ 5,0 % en p/p à 16 % en p/p, de préférence d'environ 7,0 % en p/p à 14 % en p/p, de manière préférée entre toutes d'environ 8,0 % en p/p à 12 % en p/p ;
- une souche *Bacillus circulans* à un rapport pondéral d'environ 5,0 % en p/p à 16 % en p/p, de préférence d'environ 7,0 % en p/p à 14 % en p/p, de manière préférée entre toutes d'environ 8,0 % en p/p à 12 % en p/p ;
- une souche *Bacillus subtilis* à un rapport pondéral d'environ 5,0 % en p/p à 16 % en p/p, de préférence d'environ 7,0 % en p/p à 14 % en p/p, de manière préférée entre toutes d'environ 8,0 % en p/p à 12 % en p/p ;
- une souche *Paracoccus pantotrophus* à un rapport pondéral d'environ 1,0 % en p/p à 7 % en p/p, de préférence d'environ 1,5 % en p/p à 6,5 % en p/p, de manière préférée entre toutes d'environ 3,0 % en p/p à 6,0 % en p/p ; et
- une souche *Paenibacillus polymyxa* à un rapport pondéral d'environ 7,0 % en p/p à 16 % en p/p, de préférence d'environ 8,0 % en p/p à 14 % en p/p, de manière préférée entre toutes d'environ 9,0 % en p/p à 12 % en p/p ;

8. Composition selon l'une quelconque des revendications 1 à 7 précédentes, **caractérisée en ce que** la composition est une poudre mouillable, une suspension aqueuse, une émulsion aqueuse, ou des combinaisons de celles-ci, de préférence une suspension aqueuse et/ou une émulsion aqueuse.

9. Composition selon l'une quelconque des revendications 1 à 8 précédentes, **caractérisée en ce que** la composition comprend en outre un agent de conservation à un rapport pondéral d'environ 10 % en p/p à 50 % en p/p, de préférence d'environ 20 % en p/p à 40 % en p/p, de manière préférée entre toutes d'environ 25 % en p/p à 35 % en p/p.

10. Composition selon l'une quelconque des revendications 1 à 9 précédentes, dans laquelle l'agent de conservation de la composition est un cryoprotecteur, dans laquelle le cryoprotecteur est de préférence du propylène glycol ou une variante de celui-ci.

11. Composition selon l'une quelconque des revendications 1 à 10 précédentes, **caractérisée en ce que** la composition comprend en outre un agent enzymatique et/ou un agent minéral.

12. Composition selon la revendication 11, dans laquelle l'agent enzymatique comprend une ou plusieurs enzymes choisies dans le groupe : peroxydases, lignine peroxydases, laccases, catalases, cytochrome c-oxydases, glucose oxydases, phénol oxydases, n- et o-déméthylases, protéases, lipases, alpha-amylases, bactériocines.

13. Composition selon l'une quelconque des revendications 1 à 12 précédentes, dans laquelle l'agent minéral comprend un agent macroélément, et un agent élément en trace, dans laquelle ledit agent macroélément comprend un ou plusieurs macroéléments choisis dans le groupe : sulfate de magnésium, chlorure de sodium, carbonate de sodium, bicarbonate de sodium, chlorure de calcium, chlorure de magnésium, sulfate de magnésium et sulfate de potassium, de préférence carbonate de sodium, bicarbonate de sodium, chlorure de calcium et sulfate de magnésium, et dans laquelle ledit agent élément en trace comprend un ou plusieurs ions ou composés des métaux : cuivre, cobalt, chrome, molybdène, nickel, wolfram et zinc.

14. Utilisation de la composition selon l'une quelconque des revendications 1 à 13 précédentes dans des piscines, et de manière préférée entre toutes dans des piscines biologiques.

15. Procédé de préparation de la composition selon l'une quelconque des revendications 1 à 13 précédentes, dans lequel chacune des espèces de l'agent bactérien est individuellement fermentée et récoltée, dans lequel chacune des espèces de l'agent bactérien est individuellement séchée.
